# EUROPEAN PATENT APPLICATION

(11) **EP 4 625 507 A1**
(43) Date of publication of application: **01.10.2025**
(21) Application number: 25153801.3
(22) Date of filing: 24.01.2025
(51) Int. Cl.: H01M 4/04, H01M 4/139, H01M 4/62, H01M 4/66, H01M 10/04

(54) **DRY ELECTRODE, METHOD OF MANUFACTURING THE SAME, AND APPARATUS FOR MANUFACTURING THE SAME**

(30) Priority: 25.03.2024 KR 20240040231
(71) Applicant: SAMSUNG SDI CO., LTD., Yongin-si, Gyeonggi-do 17084 (KR)
(72) Inventor: Bang, Seunggwon, 17084 Yongin-si, Gyeonggi-do (KR); Lee, Jinhyon, 17084 Yongin-si, Gyeonggi-do (KR); Choi, Jongsup, 17084 Yongin-si, Gyeonggi-do (KR); Ko, Gyeongbin, 17084 Yongin-si, Gyeonggi-do (KR); Kim, Janghwan, 17084 Yongin-Si, Gyeonggi-do (KR)
(74) Representative: Gulde & Partner

(57) **Abstract**

A dry electrode, a manufacturing method thereof, and a manufacturing apparatus thereof are disclosed. The manufacturing method includes: mixing an electrode active material, a first binder, and a first conductive material to form a dry mixture; allowing the dry mixture to be filmed to form an electrode active material layer; forming a composite layer on the electrode active material layer; and laminating on an electrode current collector the electrode active material layer on which the composite layer is formed. The step of forming the composite layer includes: coating on the electrode active material layer an adhesive solution including a second binder, a second conductive material, and an organic solvent; and drying the adhesive solution.

## Description

### BACKGROUND

### 1. Field

One or more embodiments of the present disclosure relate to a dry electrode, a method of manufacturing the dry electrode, and an apparatus for manufacturing the dry electrode.

### 2. Description of the Related Art

There has recently been active development of relatively high-energy-density and high-safety batteries that is driven by industrial demands. For example, lithium ion batteries are being commercialized not only in information-related and/or communication-related devices but also in the automotive industry. In the automotive industry, safety is particularly emphasized due to its direct relation to human well-being.

Recently, there have been proposed all solid-state batteries in which electrolyte solutions are replaced with solid electrolytes. As all solid-state batteries do not use flammable organic dispersion mediums (i.e. electrolyte solutions), the possibility of fire or explosion may be significantly reduced even in the event of short-circuit. Therefore, compared to lithium ion batteries that use electrolyte solutions, such all solid-state batteries (that do not use the organic solvent and/or electrolyte solutions) may have greatly increased safety.

### SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward a method of manufacturing a dry electrode through which the dry electrode may be manufactured easily and effectively and/or toward an apparatus for manufacturing a dry electrode.

One or more aspects of embodiments of the present disclosure are directed toward a dry electrode whose resistance is reduced.

Additional aspects will be set forth in part in the description which follows and, in part, will be apparent from the description, or may be learned by practice of the presented embodiments of the disclosure.

According to one or more embodiments of the present disclosure, a method of manufacturing a dry electrode includes: mixing an electrode active material, a first binder, and a first conductive material to form a dry mixture; allowing the dry mixture to be filmed to form an electrode active material layer; forming a composite layer on the electrode active material layer; and laminating the electrode active material layer on an electrode current collector, the electrode active material layer being on which the composite layer is formed (i.e., laminating the electrode active material layer with the composite layer on an electrode current collector, wherein the composite layer is arranged between the electrode active material layer and the electrode current collector). The step (e.g., act or task) of forming the composite layer includes: coating an adhesive solution on the electrode active material layer, the adhesive solution including a second binder, a second conductive material, and an organic solvent; and drying the adhesive solution.

According to one or more embodiments of the present disclosure, an apparatus for manufacturing a dry electrode includes: a roller that transfers an electrode active material layer; an adhesive solution supply that supplies an adhesive solution on the electrode active material layer; a distance sensor that recognizes a traveling distance of the electrode active material layer; a dryer that dries the adhesive solution; and a laminator that laminates an electrode current collector and the electrode active material layer.

According to one or more embodiments of the present disclosure, a dry electrode (which is obtained by the afore-mentioned method) includes: an electrode current collector; an electrode active material layer on the electrode current collector, the electrode active material layer including an electrode active material, a first binder, and a first conductive material; and a composite layer between the electrode current collector and the electrode active material layer. The composite layer may include the electrode active material, the first binder, the first conductive material, a second binder, and a second conductive material. A concentration of the second binder may be changed in the composite layer.

### BRIEF DESCRIPTION OF DRAWINGS

The above and other aspects, features, and advantages of certain embodiments of the present disclosure will be more apparent from the following description taken in conjunction with the accompanying drawings.
FIG. 1 illustrates a simplified conceptual diagram showing a rechargeable lithium battery according to one or more embodiments of the present disclosure.
FIGS. 2 to 5 each illustrate a simplified cross-sectional view showing a rechargeable lithium battery according to one or more embodiments of the present disclosure.
FIG. 6 illustrates a cross-sectional view showing an all solid-state battery according to one or more embodiments of the present disclosure.
FIG. 7 illustrates a cross-sectional view showing a dry electrode according to one or more embodiments of the present disclosure.
FIG. 8 illustrates a graph showing a concentration distribution of a second binder in a cross-section of a dry electrode according to one or more embodiments of the present disclosure.
FIG. 9 illustrates a graph showing a concentration distribution of a second binder in a cross-section of a dry electrode according to a comparative example of the present disclosure.
FIG. 10 illustrates a perspective view showing a pattern-coated dry electrode according to one or more embodiments of the present disclosure.
FIG. 11 illustrates a flow chart showing a method of manufacturing a dry electrode according to one or more embodiments of the present disclosure.
FIGS. 12, 13, 14, 15, and 16 each illustrate a perspective view showing a method of manufacturing a dry electrode according to one or more embodiments of the present disclosure.
FIG. 17 illustrates a schematic diagram showing an apparatus for manufacturing a dry electrode according to one or more embodiments of the present disclosure.
FIG. 18 illustrates a schematic diagram showing a dryer according to one or more embodiments of the present disclosure.

### DETAILED DESCRIPTION

In order to sufficiently understand the configurations and aspects of the present disclosure, one or more embodiments of the disclosure will be described with reference to the accompanying drawings. It should be noted, however, that the present disclosure is not limited to the following example embodiments, and may be implemented in one or more suitable forms. Rather, the example embodiments are provided only to illustrate the present disclosure and let those skilled in the art fully know the scope of the disclosure.

In the present disclosure, it will be understood that, if (e.g., when) an element is referred to as being on another element, the element may be directly on the other element or intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise specially noted in the present disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure". In addition, unless otherwise specially noted, the phrase "A or B" or "A and/or B" or "A/B" may indicate "A but not B", "B but not A", and "A and B". The terms "comprises/includes" and/or "comprising/including" used in the disclosure do not exclude the presence or addition of one or more other components.

As used herein, the term "combination thereof" may refer to a mixture, a stack, a composite, a copolymer, an alloy, a blend, or a reaction product of the constituents.

Unless otherwise especially defined in the disclosure, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method widely suitable to those skilled in the art, for example, by a particle size analyzer, for example, HORIBA, LA-950 laser particle size analyzer, a transmission electron microscope (TEM), or a scanning electron microscope (SEM). In one or more embodiments, a dynamic light-scattering measurement device is used to perform a data analysis, the number of particles is counted for each particle size range, and then from the data, an average particle diameter (D₅₀) value may be obtained through a calculation. In some embodiments, a laser scattering method may be utilized to measure the average particle diameter (D₅₀). In the laser scattering method, target particles are distributed in a distribution solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates an average particle diameter, and when the particles are non-spherical, the "diameter" indicates a major axis length.

The term "dry electrode" or "dry electrode film", utilized herein, refers to an electrode or electrode film comprising an electrode active material layer that does not include a solvent or intentionally does not utilize a solvent in the electrode preparation process. Solvents include process solvents, process solvent residues, process solvent impurities, and/or the like.

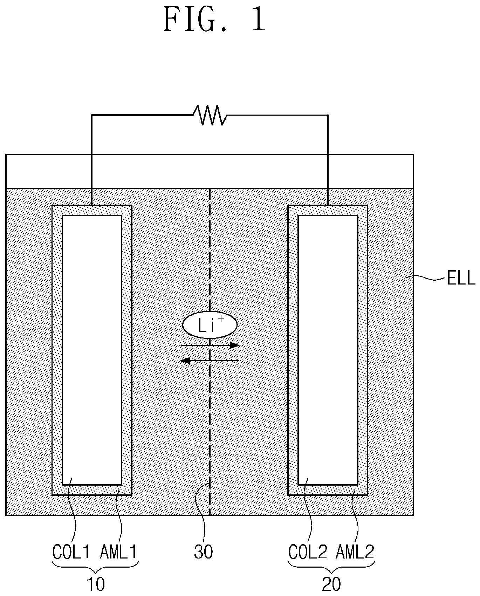

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte solution (electrolyte) ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte solution ELL. In one or more embodiments, the positive electrode 10, the negative electrode 20, and the separator 30 may be impregnated in (and/or with) the electrolyte solution ELL.

The electrolyte solution ELL may be a medium in which lithium ions are migrated and transferred between the positive electrode 10 and the negative electrode 20. In the electrolyte solution ELL, the lithium ions may move through the separator 30 toward one of (e.g., selected from among) the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material (e.g., in a form of particles) and may further include a binder and/or a conductive material.

For example, in some embodiments, the positive electrode 10 may further include an additive that may serve as a sacrificial positive electrode.

An amount of the positive electrode active material may be in a range of about 90 wt% to about 99.5 wt% relative to 100 wt% of a total weight of the positive electrode active material layer AML1. Amounts of the binder and the conductive material may each be about 0.5 wt% to about 5 wt% relative to 100 wt% of the total weight of the positive electrode active material layer AML1.

The binder may serve to improve attachment of positive electrode active material particles to each other and also to improve attachment of the positive electrode active material to the current collector COL1. The binder may include, for example, one or more selected from among polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material (e.g., an electrically conductive material or electron conductor) may be used to provide an electrode with conductivity, and any suitable conductive material without causing chemical change of a battery may be used as the conductive material to constitute the battery. The conductive material may include, for example, a carbon-based material such as natural graphite, artificial graphite, carbon black, acetylene black, Ketjen black, carbon fiber, carbon nano-fiber, and/or carbon nano-tube; a metal powder or metal fiber containing one or more of (e.g., selected from among) copper, nickel, aluminum, and silver; a conductive polymer such as a polyphenylene derivative; and/or a (e.g., any suitable) mixture thereof.

In one or more embodiments, aluminum (Al) may be used as the current collector COL1, but embodiments of the present disclosure are not limited thereto.

### Positive Electrode Active Material

The positive electrode active material in the positive electrode active material layer AML1 may include a compound (e.g., lithiated intercalation compound) that may reversibly intercalate and deintercalate lithium. For example, in one or more embodiments, the positive electrode active material may include at least one kind of composite oxide including lithium and a metal that is selected from among cobalt, manganese, nickel, and/or a (e.g., any suitable) combination thereof.

The composite oxide may include lithium transition metal composite oxides, for example, lithium-nickel-based oxides, lithium-cobalt-based oxides, lithium-manganese-based oxides, lithium-iron-phosphate-based compounds, cobalt-free nickel-manganese-based oxides, and/or a (e.g., any suitable) combination thereof.

For example, in one or more embodiments, the positive electrode active material may include a compound expressed by one selected from among chemical formulae: LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O₂₋ₐDₐ (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LₐMn_{1-b}G_{b}O₂ (where 0.90≤a≤1.8 and 0.001≤b≤0.1); LiₐMn₂G_{b}O₄(where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); LiₐFePO₄ (where 0.90≤a≤1.8).

In the foregoing chemical formulae, A may be nickel (Ni), cobalt (Co), manganese (Mn), or a (e.g., any suitable) combination thereof, X may be Al, Ni, Co, Mn, chromium (Cr), iron (Fe), magnesium (Mg), strontium (Sr), vanadium (V), a rare-earth element, or a (e.g., any suitable) combination thereof, D may be oxygen (O), fluorine (F), sulfur (S), phosphorous (P), or a (e.g., any suitable) combination thereof, G may be Al, Cr, Mn, Fe, Mg, lanthanum (La), cerium (Ce), Sr, V, or a (e.g., any suitable) combination thereof, and L¹ may be Mn, Al, or a (e.g., any suitable) combination thereof.

For example, in one or more embodiments, the positive electrode active material may be a high nickel-based positive electrode active material having a nickel content (e.g., amount) of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of a total metal excluding lithium in the lithium transition metal composite oxide. The high nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material (e.g., in a form of particles) and may further include a binder and/or a conductive material.

For example, in one or more embodiments, the negative electrode active material layer AML2 may include a negative electrode active material of about 90 wt% to about 99 wt%, a binder of about 0.5 wt% to about 5 wt%, and a conductive material of about 0 wt% to about 5 wt%, based on 100 wt% of a total weight of the negative electrode active material layer.

The binder may serve to improve attachment of negative electrode active material particles to each other and also to improve attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

When an aqueous binder is used as the binder of the negative electrode, a cellulose-based compound capable of providing viscosity may further be included. The cellulose-based compound may include one or more selected from among carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electrically conductive material or electron conductor) may be used to provide an electrode with conductivity, and any suitable conductive material without causing chemical change of a battery may be used as the conductive material to constitute the battery. For example, in one or more embodiments, the conductive material may include a carbon-based material such as natural graphite, artificial graphite, carbon black, acetylene black, Ketjen black, carbon fiber, carbon nano-fiber, and/or carbon nano-tube; a metal powder or metal fiber including one or more selected from among copper, nickel, aluminum, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that may reversibly intercalate and deintercalate lithium ions, lithium metal, a lithium metal alloy, a material that may dope and de-dope lithium, or a transition metal oxide.

The material that may reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped (e.g., irregularly shaped), sheet-shaped, flake-shaped, sphere-shaped, or fiber-shaped natural graphite and/or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material that may dope and de-dope lithium may include a Si-based negative electrode active material or a Sn-based negative electrode active material. The Si-based negative electrode active material may include silicon, a silicon-carbon composite, SiOₓ (where 0<x≤2), an Si-Q alloy (where Q is an alkali metal, an alkaline earth metal, a Group 13 element, a Group 14 element (except for Si), a Group 15 element, a Group 16 element, a transition metal, a rare-earth element, or a (e.g., any suitable) combination thereof), and/or a (e.g., any suitable) combination thereof. The Sn-based negative electrode active material may include Sn, SnOₖ (0<k≤2) (e.g., SnO₂), a Sn-based alloy, or a (e.g., any suitable) combination thereof.

The silicon-carbon composite may be a composite of silicon and amorphous carbon (e.g., in a form of particles). According to one or more embodiments, the silicon-carbon composite may have a structure in which the amorphous carbon is coated on a surface of each of silicon particle. For example, in one or more embodiments, the silicon-carbon composite may include a secondary particle (core) in which primary silicon particles are assembled, and an amorphous carbon coating layer (shell) on (e.g., positioned on) a surface of the secondary particle. The amorphous carbon may also be positioned between the primary silicon particles, and for example, the primary silicon particles may be coated with the amorphous carbon. The secondary particles may be present dispersed in an amorphous carbon matrix.

In one or more embodiments, the silicon-carbon composite may further include crystalline carbon. For example, the silicon-carbon composite may include a core including crystalline carbon and silicon particles and may also include an amorphous carbon coating layer positioned on a surface of the core.

In one or more embodiments, the Si-based negative electrode active material and/or the Sn-based negative electrode active material may be used in combination with a carbon-based negative electrode active material.

### Separator 30

Based on type or kind of the rechargeable lithium battery, the separator 30 may be present between the positive electrode 10 and the negative electrode 20. The separator 30 may include one or more selected from among polyethylene, polypropylene, and polyvinylidene fluoride, or may have a multi-layered separator thereof such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate and a coating layer positioned on a surface (e.g., one surface or two opposite surfaces) of the porous substrate, and the coating layer may include an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, a glass fiber, and polytetrafluoroethylene (e.g., Teflon^{™}), or may be a copolymer or a mixture including two or more thereof.

The organic material may include a polyvinylidenefluoride-based copolymer and/or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, Boehmite, and/or a (e.g., any suitable) combination thereof, but embodiments of the present disclosure are not limited thereto.

In one or more embodiments, the organic material and the inorganic material may be present as being mixed in one coating layer or may be present as a stack of a coating layer including the organic material and a coating layer including an inorganic material.

### Electrolyte Solution ELL

The electrolyte solution ELL for the rechargeable lithium battery may include a non-aqueous organic solvent and a lithium salt.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane and/or 1.4-dioxolane; and/or sulfolanes.

The non-aqueous organic solvent may be used alone or in a mixture of two or more thereof.

In addition, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a rechargeable lithium battery and plays a role in enabling a basic operation of the rechargeable lithium battery and in promoting the movement of lithium ions between the positive electrode and the negative electrode. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Rechargeable Lithium Battery

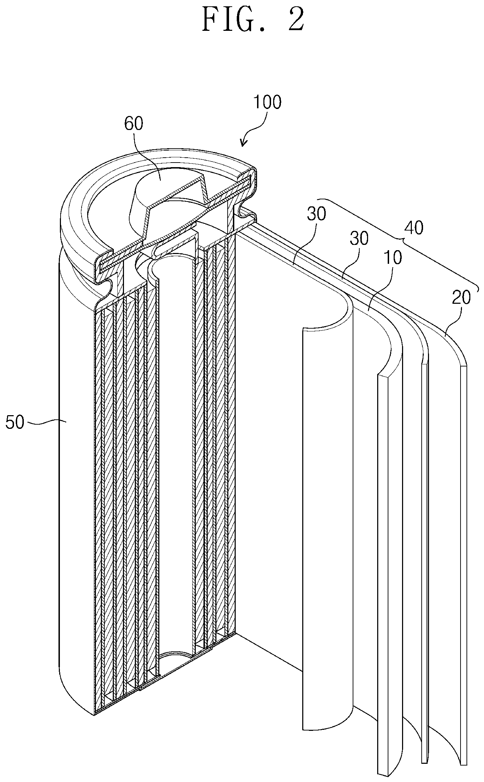

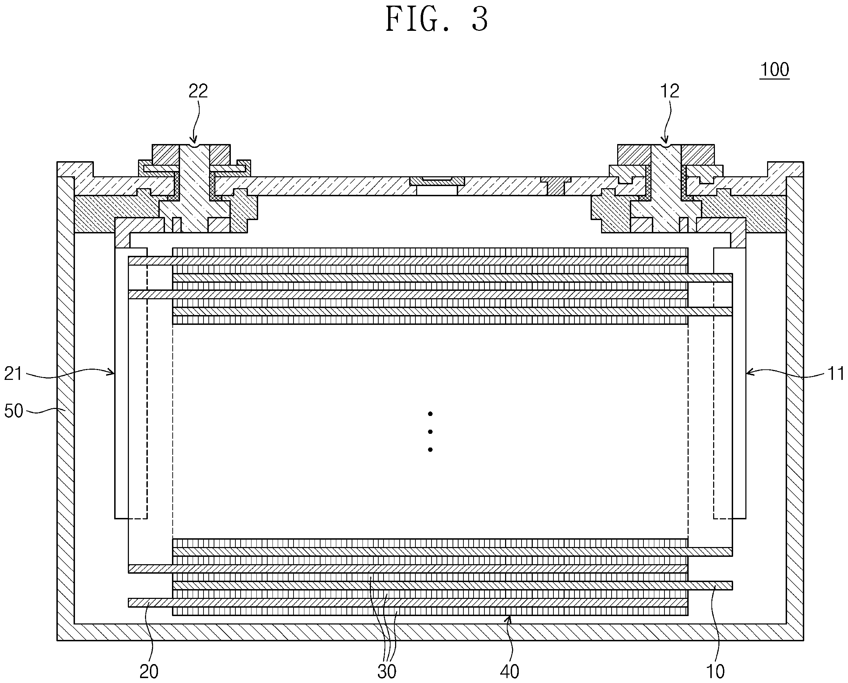

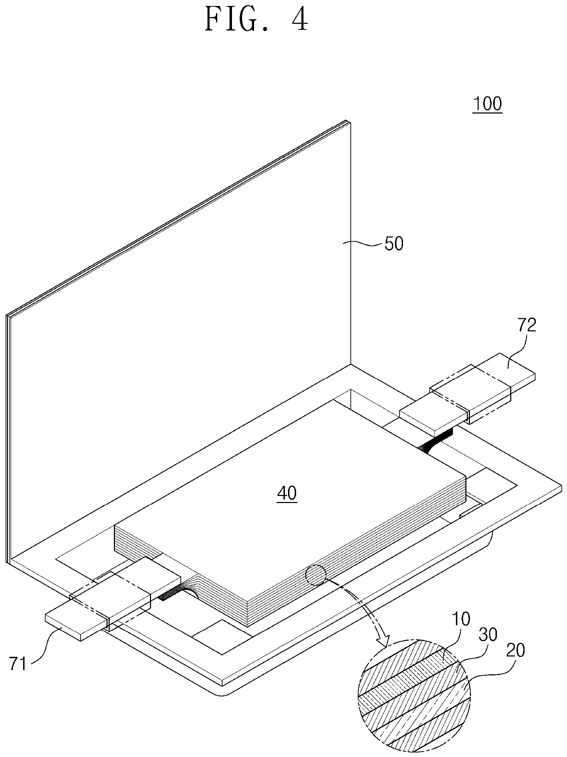

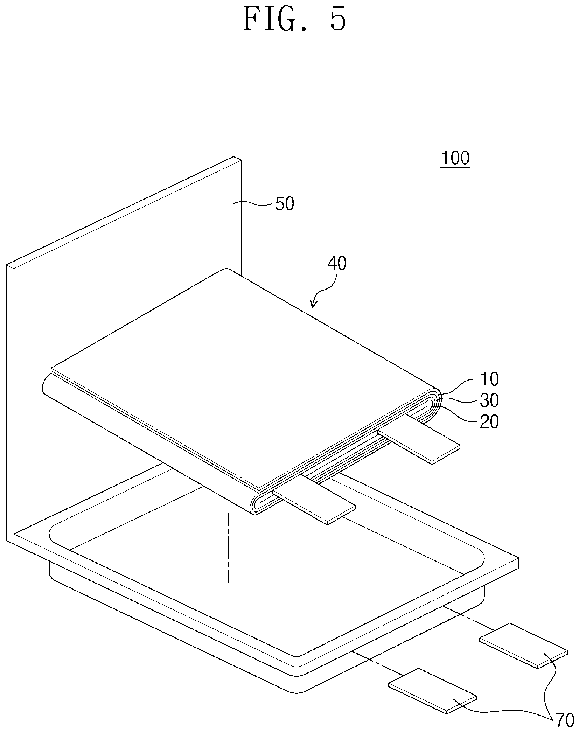

Based on the shape of a rechargeable lithium battery, the rechargeable lithium battery may be classified into cylindrical, prismatic, pouch, or coin types (kinds). In FIGS. 2 to 5 each illustrating a simplified diagram showing a rechargeable lithium battery according to one or more embodiments of the present disclosure, FIG. 2 shows a cylindrical battery, FIG. 3 shows a prismatic battery, and FIGS. 4 and 5 each show a pouch-type or kind battery. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte solution. In some embodiments, the rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. In some embodiments, as shown in FIGS. 4 and 5, the rechargeable lithium battery 100 may include an electrode tab 70, or a positive electrode tab 71 and a negative electrode tab 72, which serve(s) as an electrical path for externally inducing a current generated in the electrode assembly 40.

A rechargeable lithium battery according to one or more embodiments of the present disclosure may be applied to automotive vehicles, mobile phones, and/or any other electrical devices, but embodiments of the disclosure are not limited thereto.

### All Solid-State Battery

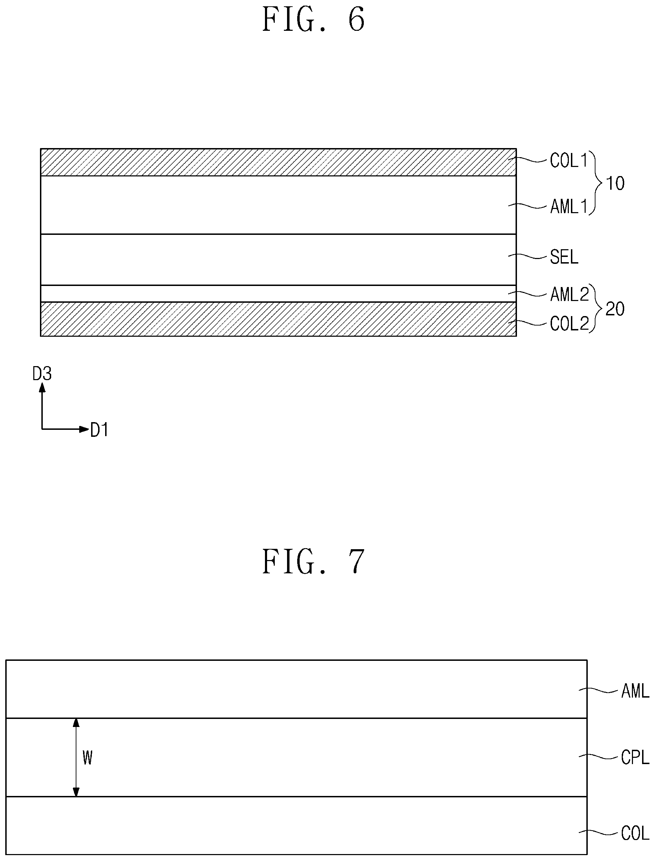

FIG. 6 illustrates a cross-sectional view showing an all solid-state battery according to one or more embodiments of the present disclosure. In one or more embodiments of the present disclosure, the rechargeable lithium battery may be an all solid-state battery.

In one or more embodiments, the positive electrode active material layer AML1 may further include a solid electrolyte. The solid electrolyte may include a sulfide-based solid electrolyte with excellent or suitable lithium-ion conductivity characteristics. The sulfide-based solid electrolyte may include, for example, at least one selected from among Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and Z is at least one selected from among Ge, Zn, and Ga), Li₂S-GeS₂, Li₂S-SiS₂-Li₃PO₄, Li₂S-SiS₂-LiₚMO_{q} (where p and q are each a positive integer, and M is at least one selected from among P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2).

In one or more embodiments, the sulfide-based solid electrolyte may be an argyrodite-type or kind compound including, for example, at least one selected from among Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). For example, in one or more embodiments, the sulfide-based solid electrolyte may be an argyrodite-type or kind compound including at least one selected from among Li₆PS₅Cl, Li₆PS₅Br, and LisPSsl.

In one or more embodiments, the sulfide-based solid electrolyte may be an argyrodite-type or kind compound including Li₇₋ₐMₐPS_{6-c}X_{c} (where 0≤a≤2 and 0≤c≤2). In the foregoing chemical formula, X may be F, Br, Cl, or a (e.g., any suitable) combination thereof. In addition, M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or any combination thereof.

The argyrodite-type or kind solid electrolyte may have a density of about 1.5 g/cc to about 2.0 g/cc. As the argyrodite-type or kind solid electrolyte has a density of equal to or greater than about 1.5 g/cc, it may decrease an internal resistance of the all solid-state battery and prevent or reduce a solid electrolyte layer from short-circuit and penetration caused by the formation of lithium dendrite. The solid electrolyte may have an elastic modulus of, for example, about 15 GPa to about 35 GPa.

The solid electrolyte included in the positive electrode active material layer AML1 may have a medium-sized average particle diameter (D₅₀) less than that of a solid electrolyte included in a solid electrolyte layer SEL which will be discussed later. For example, in one or more embodiments, the medium-sized average particle diameter (D₅₀) of the solid electrolyte included in the positive electrode active material layer AML1 may be equal to or less than about 90%, equal to or less than about 80%, equal to or less than about 70%, equal to or less than about 60%, equal to or less than about 50%, equal to or less than about 40%, equal to or less than about 30%, or equal to or less than about 20% of a medium-sized average particle diameter (D₅₀) of a solid electrolyte included in a solid electrolyte layer SEL. The medium-sized average particle diameter (D₅₀) may be a median diameter measured by a laser particle size distribution analyzer.

In one or more embodiments of the present disclosure, the all solid-state battery may include a solid electrolyte layer SEL instead of the electrolyte solution ELL as described above in more detail. The solid electrolyte layer SEL may include a solid electrolyte, for example, a sulfide-based solid electrolyte. The sulfide-based solid electrolyte may be prepared by, for example, melting and quenching or mechanically milling a starting raw material such as Li₂S and/or P₂S₅. In addition, the resultant may be thermally treated after the treatment mentioned above. The solid electrolyte may be in an amorphous state, a crystalline state, or a mixed state of amorphous and crystalline states. The solid electrolyte may include at least sulfur (S), phosphorus (P), and lithium (Li) among component elements included in the sulfide-based solid electrolyte described above. For example, the solid electrolyte may be a material including Li₂S-P₂S₅. When a material including Li₂S-P₂S₅ is used as a sulfide-based solid electrolyte material of the solid electrolyte, a mixing molar ratio of Li₂S to P₂S₅ may be in a range of about 50:50 to about 90:10 (or Li₂S:P₂S₅ = 50:50 to 90:10).

The sulfide-based solid electrolyte may be an argyrodite-type or kind compound including, for example, at least one selected from among Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). For example, in one or more embodiments, the sulfide-based solid electrolyte may be an argyrodite-type or kind compound including at least one selected from among Li₆PS₅Cl, Li₆PS₅Br, and LisPSsl.

In one or more embodiments, the sulfide-based solid electrolyte may be an argyrodite-type or kind compound including Li₇₋ₐMₐPS_{6-c}X_{c} (where 0≤a≤2 and 0≤c≤2). In the foregoing chemical formula, X may be F, Br, Cl, or a (e.g., any suitable) combination thereof. In addition, M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or any combination thereof.

The argyrodite-type or kind solid electrolyte may have a density of about 1.5 g/cc to about 2.0 g/cc. As the argyrodite-type or kind solid electrolyte has a density of equal to or greater than about 1.5 g/cc, it may decrease an internal resistance of the all solid-state battery and prevent or reduce the solid electrolyte layer SEL from short-circuit and penetration caused by the formation of lithium dendrite. The solid electrolyte may have an elastic modulus of, for example, about 15 GPa to about 35 GPa.

In one or more embodiments, the solid electrolyte layer SEL may further include a binder. The binder included in the solid electrolyte layer SEL may include a styrene-butadiene rubber (SBR), polytetrafluoroethylene (PTFE), polyvinylidene fluoride, and/or polyethylene, but embodiments of the present disclosure are not limited thereto. The binder of the solid electrolyte layer SEL may be the same as or similar to that of the positive electrode active material layer AML1 or that of the negative electrode active material layer AML2.

### Dry Electrode

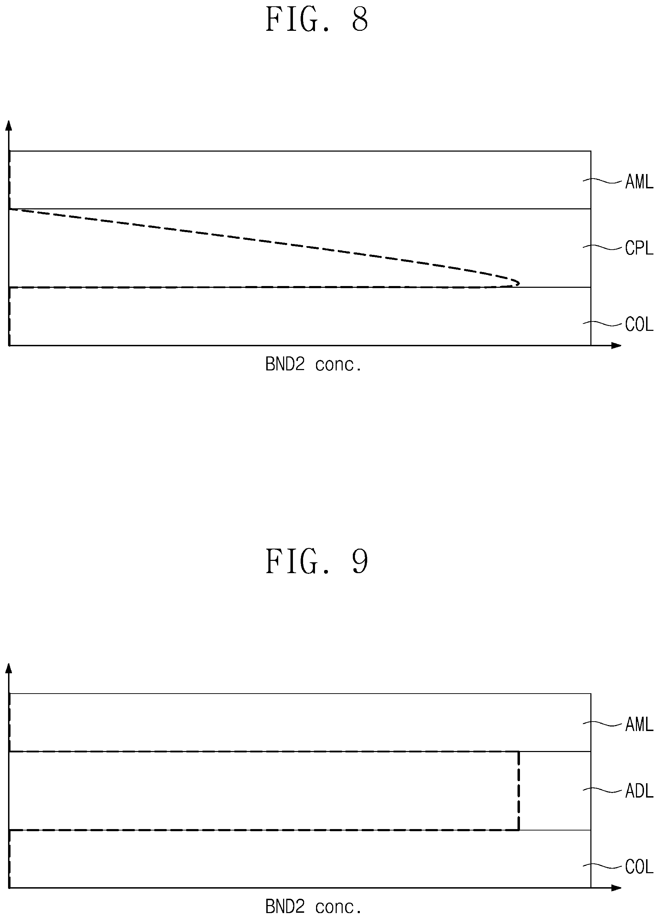

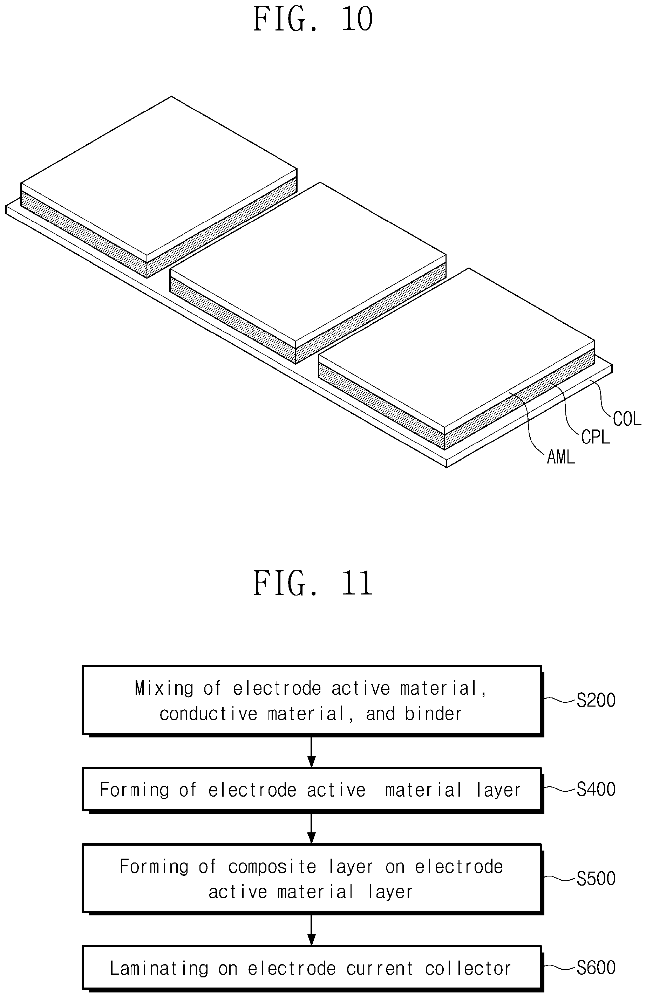

FIG. 7 illustrates a cross-sectional view showing a dry electrode (positive electrode or negative electrode) according to one or more embodiments of the present disclosure. FIGS. 8 and 9 illustrate graphs each showing a concentration distribution of a second binder in a cross-section of a dry electrode according to one or more embodiments of the present disclosure. FIG. 10 illustrates a perspective view showing a pattern-coated dry electrode according to one or more embodiments of the present disclosure. In the following disclosure, a description of components the same as those discussed with reference to FIG. 1 will not be provided, and a difference thereof will be discussed in more detail.

Referring to FIG. 7, a dry electrode according to one or more embodiments of the present disclosure includes an electrode current collector COL, an electrode active material layer AML, and a composite layer CPL.

The electrode current collector COL may include the positive electrode current collector COL1 or the negative electrode current collector COL2 discussed above.

The electrode active material layer AML may include the positive electrode active material layer AML1 or the negative electrode active material layer AML2 discussed above. The electrode active material layer AML may include an electrode active material, a first binder, and a first conductive material. The electrode active material may include the positive electrode active material or the negative electrode active material discussed above. In one or more embodiments, the electrode active material layer AML may further include a solid electrolyte.

The first binder may serve to improve attachment of positive (or negative) electrode active material particles to each other and also to improve attachment of the positive (or negative) electrode active material to the electrode current collector COL. The first binder may include, for example, polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

For example, in one or more embodiments, the first binder may be a dry binder. The dry binder may be defined to refer to a binder that is not impregnated, dissolved, or dispersed in a solvent. For example, the dry binder may be a binder that does not include a solvent or does not contact a solvent.

The dry binder may be, for example, a fibrillated binder. The fibrillated binder may serve as a matrix that supports and binds the electrode active material and other components included in the electrode active material layer AML. For example, a scanning electron microscope image of an electrode cross-section may be used to ascertain that the fibrillated binder has a fibrous morphology. The fibrillated binder may have an aspect ratio of equal to or greater than about 10, equal to or greater than about 20, equal to or greater than about 50, or equal to or greater than about 100.

In one or more embodiments, the first binder may include at least one selected from among polytetrafluoroethylene (PTFE), polyvinylidene fluoride-hexafluoropropylene (PVDF-HFP) copolymers, polyvinylidene fluoride (PVDF), polyvinyl alcohol (PVA), polyacrylonitrile (PAN), carboxymethyl cellulose (CMC), starch, hydroxypropyl cellulose, cellulose, polyvinylpyrrolidone (PVP), polyethylene (PE), polypropylene (PP), ethylene-propylene-diene polymers (EPDM), sulfonated EPDM, styrene-butadiene rubbers (SBR), and fluoro rubbers.

In one or more embodiments, the dry binder may include a fluorine-based binder. The fluorine-based binder may include, for example, at least one selected from among polytetrafluoroethylene (PTFE), polyvinylidene fluoride-hexafluoropropylene (PVDF-HFP) copolymers, and polyvinylidene fluoride (PVDF).

An amount of the first binder may be about 0.5 wt% to about 5 wt% relative to 100 wt% of a total weight of the electrode active material layer AML. When the amount of the first binder satisfies the range above, an electrode binding force may be increased, and a high electrode energy density may be maintained.

The first conductive material, which is an electrically conductive material, is used to provide an electrode with conductivity, and any suitable conductive material without causing chemical change of a battery may be used as the first conductive material to constitute the battery. The first conductive material may include, for example, a carbon-based material such as natural graphite, artificial graphite, carbon black, acetylene black, Ketjen black, carbon fiber, carbon nano-fiber, and/or carbon nano-tube; a metal powder or metal fiber containing one or more selected from among copper, nickel, aluminum, and silver; a conductive polymer such as a polyphenylene derivative; and/or a (e.g., any suitable) mixture thereof. For example, the first conductive material may include at least one selected from among a carbon-based material, a metal-based material, a conductive polymer, and/or a (e.g., any suitable) mixture thereof.

The first conductive material may be a dry conductive material. The dry conductive material may be defined to refer to a conductive material that is not impregnated, dissolved, or dispersed in a solvent. For example, the dry conductive material may be a conductive material that does not include a solvent or does not contact a solvent.

The dry conductive material may include, for example, a carbon-based material, a metal-based material, and/or a (e.g., any suitable) combination thereof discussed above. The carbon-based material may include carbon black, graphite particles, natural graphite, artificial graphite, acetylene black, Ketjen black, carbon fiber, and/or carbon nano-tube, but embodiments of the present disclosure are not limited thereto, and any suitable material may be used as the carbon-based material as long as being used in the art.

An amount of the first conductive material may be about 0.5 wt% to about 5 wt% relative to 100 wt% of a total weight of the electrode active material layer AML. When the amount of the first conductive material satisfies the range above, electrode conductivity may be increased and a high electrode energy density may be maintained.

The composite layer CPL is arranged between the electrode current collector COL and the electrode active material layer AML. The composite layer CPL may be configured to combine (or adhere) the electrode active material layer AML with the electrode current collector COL. The composite layer CPL may include substantially the same components as those of the electrode active material layer AML, and for example, may include an electrode active material, a first binder, and a first conductive material. In addition, the composite layer CPL may further include other components excluding from the electrode active material layer AML, and for example, in one or more embodiments, may further include a second binder and a second conductive material. For example, the composite layer CPL may be a layer in which components of the electrode active material layer AML and components of an adhesive layer ADL are present together with each other.

As the composite layer CPL includes the second binder, there may be an increase in binding force between the electrode current collector COL and the electrode active material layer AML. The second binder in the composite layer CPL may be, for example, a conductive binder or a non-conductive binder. The conductive binder may be, for example, an ionically conductive binder and/or an electronically conductive binder. A binder having both (e.g., simultaneously) ionic conductivity and electronic conductivity may be classified as both (e.g., simultaneously) an ionically conductive binder and an electronically conductive binder.

The ionically conductive binder may include, for example, one or more selected from among polystyrene sulfonate (PSS), polyvinylidene fluoride-hexafluoropropylene copolymers (PVDF-HFP), polyvinyl fluoride (PVF), polyvinylidene fluoride (PVDF), poly(methyl methacrylate) (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPy), polyacrylonitrile (PAN), polyaniline, and polyacetylene. The ionically conductive binder may include a polar functional group. The ionically conductive binder containing a polar functional group may include, for example, one or more selected from among Nafion^{™}, Aquivion^{™}, Flemion^{™}, Gore^{™}, Aciplex^{™}, Morgane ADP^{™}, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), and lithium 9,10-diphenylanthracene-2-sulfonate (DPASLi⁺).

The electronically conductive binder may include, for example, one or more selected from among polyacetylene, polythiophene, polypyrrole, poly(p-phenylene), poly(phenylenevinylene), poly(phenylene sulfide), and polyaniline. The composite layer CPL may be, for example, a conductive layer including a conductive polymer.

In one or more embodiments, the second binder included in the composite layer CPL may be selected from the first binder included in the electrode active material layer AML. The second binder of the composite layer CPL may be the same as the first binder of the electrode active material layer AML. The second binder of the composite layer CPL may be, for example, a fluorine-based binder. The fluorine-based binder of the composite layer CPL may include, for example, polyvinylidene fluoride (PVDF). The composite layer CPL may be, for example, a binding layer including the second binder.

In one or more embodiments, the first binder and the second binder may be different from each other. For example, in some embodiments, the first binder may include polytetrafluoroethylene (PTFE), and the second binder may include at least one selected from among polyvinylidene fluoride (PVDF) and a styrene-butadiene rubber (SBR).

An amount of the second binder may be about 5 wt% to about 20 wt% relative to 100 wt% of a total weight of the composite layer CPL. When the amount of the second binder satisfies the range above, there may be an increase in binding force between the electrode current collector COL and the electrode active material layer AML.

A total thickness w of the composite layer CPL may be in a range of about 1 micrometer (µm) to about 3 µm. For example, the total thickness w of the composite layer CPL may be defined to refer to a region where the second binder is present.

Referring to FIG. 8, a concentration of the second binder may be changed in the composite layer CPL. For example, in one or more embodiments, the concentration of the second binder in the composite layer CPL may gradually decrease (e.g., instead of an abrupt change, the concentration of the binder changes slowly or gradually, e.g., a smooth slope rather than a sudden drop) in a direction from a top surface (i.e., surface facing the electrode active material layer AML) of the electrode current collector COL toward the electrode active material layer AML. To put it another way, the gradual decrease in the concentration of the second binder within the composite layer refer to that there is a concentration gradient that occurs from the top surface of the electrode current collector (the surface facing the electrode active material layer) toward the electrode active material layer itself. By varying the binder concentration in this manner (e.g., slow and incremental), the dry electrode can achieve improved performance and reliability. Moreover, the concentration of the second binder in the composite layer CPL may have a maximum value at an interface between the top surface of the electrode current collector COL and a bottom surface (i.e., surface adjacent to the top surface of the electrode current collector COL) of the composite layer CPL. The concentration of the second binder may have a minimum value (e.g., zero) at an interface between the composite layer CPL and the electrode active material layer AML.

According to a comparative example of the disclosure, a dry electrode may include an electrode current collector COL, an electrode active material layer AML, and an adhesive layer ADL. The composite layer CPL depicted in FIGS. 7 and 8 according to one or more embodiments of the present disclosure may be a layer where the electrode active material layer AML and the adhesive layer ADL are blended (mixed) with each other. In contrast, the adhesive layer ADL according to the comparative example may be a separate layer distinctly distinguished from the electrode active material layer AML. By including the composite layer CPL having the above-described characteristics, there may be an increase in binding force between the electrode current collector COL and the electrode active material layer AML.

The adhesive layer ADL may include a second binder and a second conductive material. The adhesive layer ADL may not include (e.g., may exclude) components of the electrode active material layer AML, and for example, may not include (e.g., may exclude) any of the electrode active material, the first binder, and/or the first conductive material. The adhesive layer ADL may be arranged between the electrode current collector COL and the electrode active material layer AML. Referring to FIG. 9, the second binder may be present only in the adhesive layer ADL. A concentration of the second binder in the adhesive layer ADL may be substantially uniform between the electrode current collector COL and the electrode active material layer AML. For example, the concentration of the second binder in the adhesive layer ADL may be constant without being substantially changed in a direction from a bottom surface (i.e., surface adjacent to the electrode current collector COL) of the adhesive layer ADL toward a top surface (i.e., surface adjacent to the electrode active material layer) of the adhesive layer ADL.

Referring back to FIG. 7, the composite layer CPL may include a second conductive material, which is an electrically conductive material (e.g., electron conductor). The second conductive material included in the composite layer CPL may be selected from the first conductive material included in the electrode active material layer AML. The second conductive material of the composite layer CPL may include a carbon-based conductive material the same as that of the first conductive material of the electrode active material layer AML. As the composite layer CPL includes a carbon-based conductive material, the composite layer CPL may be a conductive layer (i.e., electric conductor). In one or more embodiments, the composite layer CPL may be a conductive layer including, for example, the second binder and a carbon-based conductive material (the second conductive material). The dry electrode according to the comparative example of the present invention does not include the composite layer CPL, but includes the adhesive layer ADL that is clearly distinguished from the electrode active material layer AML. As a result, the binding force between the electrode current collector COL and the electrode active material layer AML may be relatively weak and the resistance of the dry electrode may be relatively high.

An amount of the second conductive material may be about 10 wt% to about 50 wt% relative to 100 wt% of a total weight of the composite layer CPL. When the amount of the second conductive material satisfies the range above, electrode conductivity may be increased and a high electrode energy density may be maintained.

In one or more embodiments, the composite layer CPL may be provided on two opposite sides of the electrode current collector COL. For example, the composite layer CPL may include a plurality of composite layers, and the electrode current collector COL may be arranged between the plurality of composite layers. The electrode active material layers AML may be correspondingly arranged on the plurality of composite layers.

Referring to FIG. 10, a dry electrode according to one or more embodiments of the present disclosure may be configured such that the composite layer CPL is pattern-coated on the electrode current collector COL. For example, the composite layer CPL may include a plurality of composite layers, and each of the plurality of composite layers may be intermittently distributed on the electrode current collector COL. The electrode active material layer AML may include a plurality of electrode active material layers, and the plurality of electrode active material layers may be correspondingly arranged on the plurality of composite layers. Thus, a dry electrode in which the composite layer CPL and the electrode active material layer AML are pattern-coated on the electrode current collector COL may be applicable to cylindrical or any other suitable shaped rechargeable batteries.

The dry electrode of one or more embodiments may be manufactured by the following manufacturing methods.

### Method of Manufacturing Dry Electrode

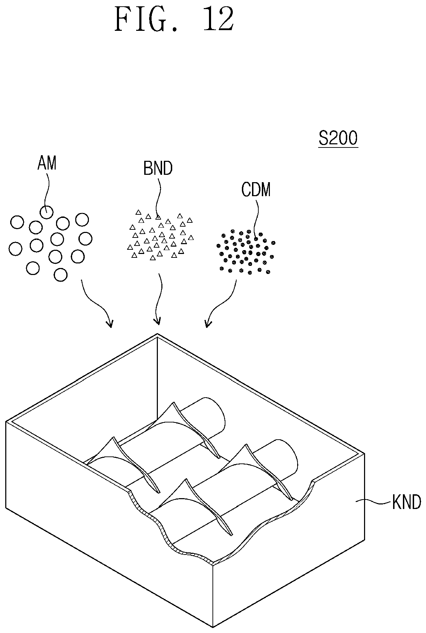

FIG. 11 illustrates a flow chart showing a method of manufacturing a dry electrode according to one or more embodiments of the present disclosure. FIGS. 12 to 16 each illustrate a perspective view showing a method of manufacturing a dry electrode according to one or more embodiments of the present disclosure.

Referring to FIG. 11, a method of manufacturing a dry electrode may include mixing an electrode active material, a first binder, and a first conductive material to form a dry mixture (S200), allowing the dry mixture to be filmed to form an electrode active material layer (S400), forming a composite layer on the electrode active material layer (S500), and laminating on an electrode current collector the electrode active material layer on which the composite layer is formed (S600). The composite layer formation step (e.g., act or task) S500 may include coating the electrode active material layer with an adhesive solution including a second binder, a second conductive material, and an organic solvent (S520) and drying the adhesive solution (S540).

Referring to FIG. 12, an electrode active material AM, a conductive material CDM, and a binder BND may be dry-mixed to form a dry mixture (S200). The dry mixing may refer to mixing without using a process solvent. The process solvent may be, for example, a solvent used in preparing an electrode slurry. The process solvent may be water or N-methyl-2-pyrrolidone (NMP), but embodiments of the present disclosure are not limited thereto, and the process solvent may be any solvent as long as being capable of being used in manufacturing electrode slurry.

The conductive material CDM and the binder BND may respectively correspond to a first conductive material and a first binder, and the first conductive material and the first binder may be a dry conductive material and a dry binder, respectively. The electrode active material AM may be a dry electrode active material.

An agitator KND may be used to perform the dry mixing at a temperature of about 25 °C to about 65 °C. For example, the agitator KND may be used to perform the dry mixing at a rotational speed in a range of about 10 rpm to about 10,000 rpm or from about 100 rpm to about 10,000 rpm. The agitator KND may be used to perform the dry mixing for about 1 minute to about 200 minutes or about 1 minute to about 150 minutes.

The dry mixing may be performed one or more times. First, the electrode active material AM, the first conductive material, and the first binder may be firstly dry-mixed to prepare a first mixture. The first dry mixing may be performed for about 15 minutes or less at a rotational speed of about 2,000 rpm or less under a temperature of about 25 °C to about 65 °C. For example, in one or more embodiments, the first dry mixing may be performed for about 5 minutes to about 15 minutes at a rotational speed of about 500 rpm to about 2,000 rpm under a temperature of about 25 °C to about 65 °C. In the first dry mixing, the electrode active material AM, the first conductive material, and the first binder may be uniformly (e.g., substantially uniformly) mixed with each other.

Successively, the electrode active material AM, the first conductive material, and the first binder may be secondly dry-mixed to prepare a second mixture. The second dry mixing may be performed for about 10 minutes or more at a rotational speed of about 4,000 rpm or more under a temperature of about 25 °C to about 65 °C. For example, in one or more embodiments, the second dry mixing may be performed for about 10 minutes to about 60 minutes at a rotational speed of about 4,000 rpm to about 9,000 rpm under a temperature of about 25 °C to about 65 °C. The second dry mixing may obtain a dry mixture including a fibrillated first binder.

In one or more embodiments, a plasticizer or a pore former may be further added to the dry mixture to form a pore in an electrode plate.

The kinds/types and amounts of the electrode active material AM, the first conductive material, and the first binder used in the dry mixture may be as discussed above.

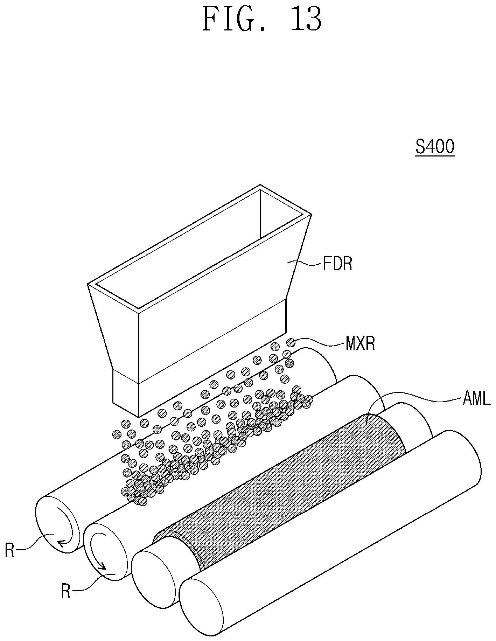

Referring to FIG. 13, the dry mixture MXR may become thin to form an electrode active material layer AML (S400). The dry mixture MXR may be introduced from a feeder FDR into an extrusion device to be extruded in the form of a sheet or film. For example, in one or more embodiments, the extrusion device may include a pair of rollers R. The dry mixture MXR may be introduced into a gap between the pair of rollers R.

For example, this step (e.g., act or task) may be performed at a temperature of about 25 °C to about 150 °C under a pressure of about 500 kPa to about 3 MPa. Thus, the film-shaped electrode active material layer AML may be formed.

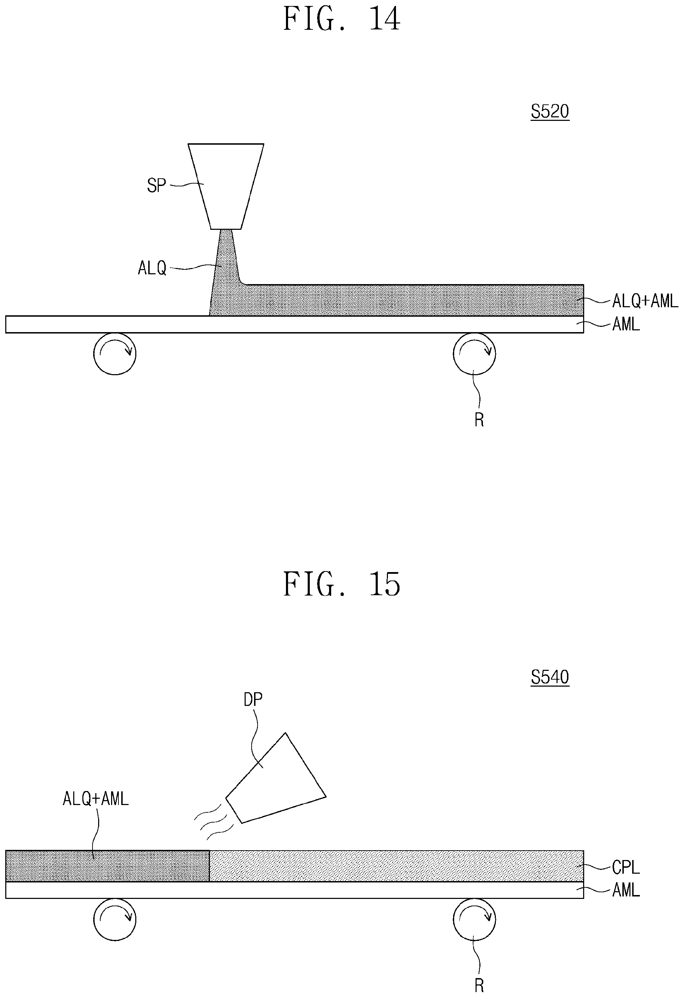

Referring to FIG. 14, an adhesive solution ALQ may be coated on the electrode active material layer AML (S520). The adhesive solution ALQ may include a second binder, a second conductive material, and an organic solvent.

In one or more embodiments, the organic solvent may include, for example, at least one selected from among ethanol, methanol, and isopropanol. As the organic solvent is included, the adhesive solution ALQ may be coated in a liquid form on the electrode active material layer AML. The organic solvent may be any solvent that can be provided in the form of the adhesive solution ALQ (i.e., liquid form), and is not limited to the described example.

For example, in one or more embodiments, the adhesive solution ALQ may further include an additive, such as dispersant, in addition to the materials described above. The dispersant may assist dispersion of the second binder and the second conductive material in the adhesive solution ALQ.

The adhesive solution ALQ may be coated by using a method widely suitable in the art. For example, in one or more embodiments, the adhesive solution ALQ may be coated by at least one selected from among spray coating, dispensing, gravure coating, and inkjet coating. For example, the spray coating may coat the adhesive solution ALQ thinly and uniformly (e.g., substantially uniformly) without directly contacting the electrode active material layer AML.

The electrode active material layer AML may include a plurality of pores. The adhesive solution ALQ may enter the plurality of pores. Thus, if (e.g., when) the adhesive solution ALQ is coated on the electrode active material layer AML, a layer ALQ+AML may be formed in which the adhesive solution ALQ and the electrode active material layer AML coexist with each other. That is, among the electrode active material layer AML manufactured in step S400, a portion of the electrode active material layers may become a composite layer CPL.

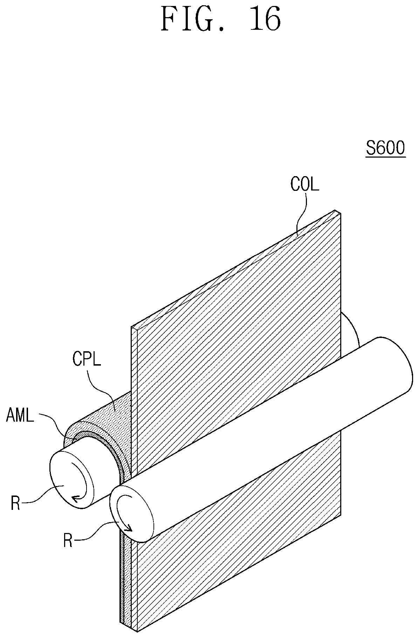

Referring to FIG. 15, the adhesive solution ALQ may be dried (S540). For example, in one or more embodiments, the adhesive solution ALQ may be dried before lamination on an electrode current collector (see COL of FIG. 16). As the organic solvent included in the adhesive solution ALQ has strong volatility, the organic solvent may be removed before lamination on the electrode current collector COL.

The drying of the adhesive solution ALQ may include drying by wind, drying by light, or drying by combination of wind and light. For example, the wind drying may include at least one selected from among hot-air drying and cool-air drying. For example, the light drying may include at least one selected from among infrared drying and ultraviolet drying.

When the adhesive solution ALQ is dried, a composite layer CPL may be formed on the electrode active material layer AML. The composite layer CPL may include, as discussed above, the electrode active material AM, the first binder, the first conductive material, the second binder, and the second conductive material. A concentration of the second binder may be changed in the composite layer CPL.

The composite layer formation step (e.g., act or task) S500 may include forming a patterned composite layer CPL on the electrode active material layer AML. For example, in one or more embodiments, in steps (e.g., acts or tasks) S520 and S540, the adhesive solution ALQ may be intermittently coated and dried on the electrode active material layer AML. Thus, a plurality of composite layers CPL may be formed in the shape of pattern on the electrode active material layer AML, and an electrode current collector (see COL of FIG. 16) may be laminated on the plurality of composite layers CPL, with the result that the electrode active material layer AML may be attached in the form of pattern to the electrode current collector COL. Consequently, a dry electrode may be obtained in which the composite layer CPL and the electrode active material layer AML are pattern-coated on the electrode current collector COL (see FIG. 10).

Referring to FIG. 16, the electrode active material layer AML may be laminated on an electrode current collector COL (S600). This step (e.g., act or task) may include providing the electrode current collector COL. A material of the electrode current collector COL may be as discussed above.

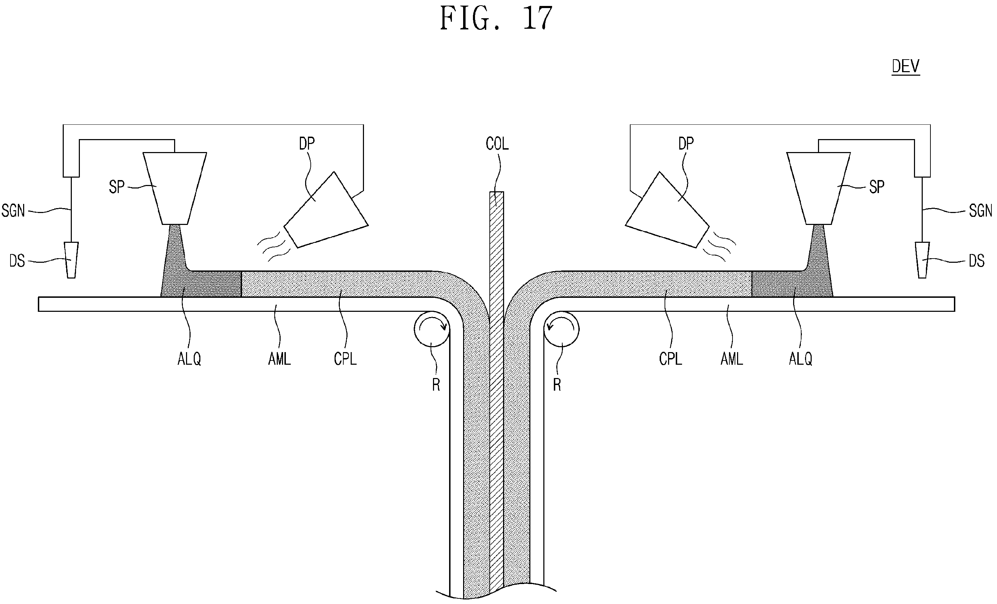

The electrode active material layer AML may be arranged on a side or surface (e.g., one side (see FIG. 16) or two opposite sides (see FIG. 17)) of the electrode current collector COL, thereby manufacturing an electrode. For example, the electrode may be manufactured by laminating the electrode active material layer AML on the electrode current collector COL. The lamination may use a roll press or a plate press, but embodiments of the present disclosure are not limited thereto.

For example, in one or more embodiments, the lamination may be performed at a temperature of about 25 °C to about 180 °C under a pressure of about 500 kPa to about 15 MPa. Thus, the electrode active material layer AML may be closely and tightly adhered to the electrode current collector COL.

A method of fabricating a dry electrode according to one or more embodiments of the present disclosure may have the following effects.

As the adhesive solution ALQ is directly coated on the electrode active material layer AML, a width of the electrode active material layer AML may be freely adjusted to adhere to the electrode current collector COL.

Moreover, in the present disclosure, the formation of an adhesive layer ADL on the electrode current collector COL may not be provided such that there may be no need for uniformly (e.g., substantially uniformly) coating an adhesive layer ADL on the electrode current collector COL and for aligning the electrode active material layer AML with the electrode current collector COL on which the adhesive layer ADL is coated, which may result in a reduction in equipment scale required for manufacturing a dry electrode and in easiness in manufacturing a dry electrode.

As the adhesive solution ALQ enters the plurality of pores in the electrode active material layer AML, there may be an increase in contact area between the first conductive material and the second conductive material and a reduction in electrode resistance. As the adhesive solution ALQ enters the plurality of pores in the electrode active material layer AML, there may be formed the composite layer (see CPL of FIG. 7) in which components of the electrode active material layer AML are blended with components of the adhesive solution ALQ.

When the adhesive layer ADL is coated in the form of pattern on the electrode current collector COL, a start point of pattern coating is set or predetermined, differently, according to one or more embodiments of the present disclosure, the adhesive solution ALQ may be intermittently coated on the electrode active material layer AML to manufacture a dry electrode on which the composite layer CPL is coated in the form of pattern, thereby increasing a manufacturing yield of the dry electrode.

### Dry Electrode Manufacturing Apparatus DEV

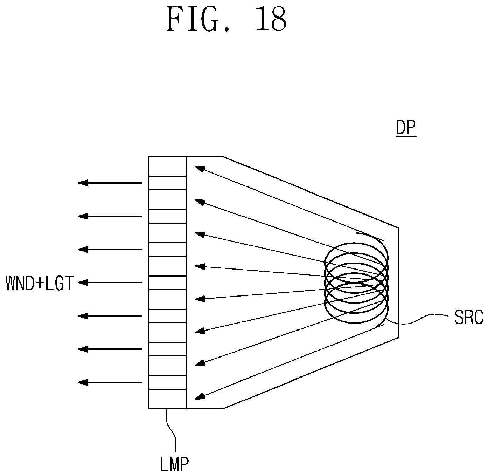

FIG. 17 illustrates a schematic diagram showing an apparatus for manufacturing a dry electrode according to one or more embodiments of the present disclosure. FIG. 18 illustrates a schematic diagram showing a dryer according to one or more embodiments of the present disclosure.

Referring to FIGS. 12, 13, and 17, a dry electrode manufacturing apparatus DEV of the present disclosure may include an agitator KND, a feeder FDR, a roller R, an adhesive solution supply SP, a distance sensor DS, a dryer DP, and a laminator.

The roller R may include a plurality of rollers (see FIGS. 12, 13, and 17). The roller R may transfer the electrode active material layer AML, the composite layer CPL, and the electrode current collector COL which will be discussed later. The roller R may continuously perform the aforementioned method of fabricating a dry electrode.

In one or more embodiments, the agitator KND may be, for example, a kneader (see FIG. 12). The agitator KND may include, for example, a chamber, one or more rotary shafts arranged in the chamber, and a blade rotatably coupled to the rotary shaft and arranged in a longitudinal direction of the rotary shaft. The blade may be, for example, at least one selected from among a ribbon blade, a sigma blade, a Z blade, a dispersing blade, and a screw blade. As the blade is included, the electrode active material AM, the dry conductive material, and the dry binder may be effectively mixed with each other even without any solvent. For example, in one or more embodiments, a dough-like dry mixture may be prepared.

The prepared dry mixture may be introduced through the feeder FDR into an extrusion device (see FIG. 13). For example, the extrusion device may include a pair of rollers R. The extrusion device may extrude the dry mixture in the form of sheet or film. For example, in one or more embodiments, the electrode active material layer AML may be formed through the feeder FDR.

For example, the extrusion device may cause the dry mixture to be filmed at a temperature of about 25 °C to about 150 °C under a pressure of about 500 kPa to about 3 MPa.

The adhesive solution supply SP may coat the adhesive solution ALQ on the electrode active material layer AML (see FIGS. 14 and 17). The adhesive solution supply SP may coat the adhesive solution ALQ by using a coating method widely suitable in the art. For example, the adhesive solution supply SP may include at least one selected from among a spray coater, a dispenser, a gravure roll coater, and an inkjet coater. For example, in some embodiments, the spray coater may coat the adhesive solution ALQ thinly and uniformly (e.g., substantially uniformly) without directly contacting the electrode active material layer AML.

The dryer DP may dry the adhesive solution ALQ (see FIGS. 15 and 17). The dryer DP may be arranged between the adhesive solution supply SP and the laminator.

The dryer DP may include at least one selected from among a wind dryer in which wind is used for drying, a light dryer in which light is used for drying, and/or a (e.g., any suitable) combination thereof. The wind dryer may include at least one selected from among a hot-air dryer and a cool-air dryer. The light dryer may include at least one selected from among an infrared dryer and an ultraviolet dryer.

Referring to FIG. 18, in one or more embodiments of the present disclosure, the dryer DP may include both (e.g., simultaneously) a wind dryer and a light dryer. The dryer DP may include a heat source SRC and a lamp LMP that provides light. The heat source SRC may supply temperature and/or wind WND. The lamp LMP may provide light LGT, an ultraviolet ray or an infrared ray. The temperature and the wind WND supplied from the heat source SRC may reach the adhesive solution ALQ after passing through a plurality of apertures formed on the lamp LMP.

The wind WND or the light LGT of the dryer DP may serve to uniformly (e.g., substantially uniformly) spread the adhesive solution ALQ on the electrode active material layer AML. The wind WND or the light LGT of the dryer DP may propagate in a radial direction or a straight direction.

The dryer DP may be configured to adjust an angle thereof (e.g., an angle of the drying and/or drying output) (e.g., relative to the composite layer CPL). It may thus be possible to uniformly (e.g., substantially uniformly) spread the adhesive solution ALQ on the electrode active material layer AML and also to prevent or reduce an unintentional diffusion of the adhesive solution ALQ. The dryer DP may form a flat composite layer CPL. In addition, the manufacturing of a dry electrode may be continuously performed without interruption.

The distance sensor DS may recognize a traveling distance of the electrode active material layer AML. The distance sensor DS may be positioned on the electrode active material layer AML. The distance sensor DS may be arranged between the feeder FDR and the adhesive solution supply SP.

For example, the distance sensor DS may detect a first point on the electrode active material layer AML, and after the electrode active material layer AML is transferred through the roller R, the distance sensor DS may detect a second point on the electrode active material layer AML, thereby using a difference in distance between the first point and the second point to recognize a traveling distance of the electrode active material layer AML.

The distance sensor DS may use a method widely suitable in the art to recognize a traveling distance of the electrode active material layer AML. For example, the distance sensor DS may irradiate light to recognize a traveling distance of the electrode active material layer AML.

The dry electrode manufacturing apparatus DEV of the disclosure may include a controller. The controller may include a plurality of controllers.

The controller may control an operation of the adhesive solution supply SP. The controller may receive a signal SGN from the distance sensor DS. For example, the controller may receive a signal detecting the first point on the electrode active material layer AML to control the adhesive solution supply SP to coat the adhesive solution ALQ. The controller may receive a signal detecting the second point on the electrode active material layer AML to control the adhesive solution supply SP to stop the coating of the adhesive solution ALQ.

The controller may control an operation of the dryer DP. The controller may adjust an angle of the dryer DP.

The laminator (e.g., lamination unit) may bond the transferred electrode active material layer AML and the composite layer CPL to the electrode current collector COL (see FIGS. 16 and 17). The laminator may include a roll press or a plate press. When the laminator includes a roll press, the laminator may include a plurality of rollers.

For example, in one or more embodiments, the laminator may bond the electrode active material layer AML and the composite layer CPL to the electrode current collector COL at a temperature of about 25 °C to about 180 °C under a pressure of about 500 kPa to about 15 MPa.

When using a method of manufacturing a dry electrode and/or an apparatus for manufacturing a dry electrode according to one or more embodiments of the present disclosure, it may easily and effectively manufacture a dry electrode. In addition, it may manufacture a dry electrode having a reduced resistance.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

## Claims

1. A method of manufacturing a dry electrode, comprising:
mixing an electrode active material, a first binder, and a first conductive material to form a dry mixture;
allowing the dry mixture to be filmed to form an electrode active material layer (AML);
forming a composite layer (CPL) on at least a part of the electrode active material layer (AML); and
laminating the electrode active material layer (AML) with the composite layer (CPL) on an electrode current collector (COL),
wherein the forming of the composite layer (CPL) comprises:
coating an adhesive solution on the electrode active material layer (AML), the adhesive solution comprising a second binder, a second conductive material, and an organic solvent; and
drying the adhesive solution.

2. The method as claimed in claim 1, wherein each of the first binder and the second binder independently comprises at least one selected from among polytetrafluoroethylene, polyvinylidene fluoride-hexafluoropropylene copolymers, polyvinylidene fluoride, polyvinyl alcohol, polyacrylonitrile, carboxymethyl cellulose, starch, hydroxypropyl cellulose, cellulose, polyvinylpyrrolidone, polyethylene, polypropylene, ethylene-propylene-diene polymers (EPDM), sulfonated EPDM, styrene-butadiene rubbers, and fluoro rubbers.

3. The method as claimed in claim 1 or 2, wherein the first binder and the second binder are different from each other.

4. The method as claimed in any one of the preceding claims, wherein each of the first conductive material and the second conductive material independently comprises at least one selected from among a carbon-based material, a metal-based material, and a conductive polymer.

5. The method as claimed in any one of the preceding claims, wherein the organic solvent comprises at least one selected from among ethanol, methanol, and isopropanol.

6. The method as claimed in any one of the preceding claims, wherein the adhesive solution further comprises a dispersant.

7. The method as claimed in any one of the preceding claims, wherein the coating of the adhesive solution comprises performing at least one selected from among spray coating, dispensing, gravure coating, and inkjet coating.

8. The method as claimed in any one of the preceding claims, wherein the drying of the adhesive solution comprises performing at least one selected from among hot-air drying, cool-air drying, infrared drying, and ultraviolet drying.

9. The method as claimed in any one of the preceding claims, wherein the forming of the composite layer comprises forming a patterned composite layer on the electrode active material layer.

10. An apparatus (DEV) for manufacturing a dry electrode, comprising:
a roller (R) configured to transfer an electrode active material layer (AML);
an adhesive solution supply (SP) configured to supply an adhesive solution on the electrode active material layer (AML);
a distance sensor (DS) configured to recognize a traveling distance of the electrode active material layer (AML);
a dryer (DP) configured to dry the adhesive solution and thereby forming a composite layer (CPL); and
a laminator configured to laminate an electrode current collector (COL) and the electrode active material layer (AML) with the composite layer (CPL).

11. The apparatus as claimed in claim 10, wherein the adhesive solution supply (SP) comprises at least one selected from among a spray coater, a dispenser, a gravure roll coater, and an inkjet coater.

12. The apparatus as claimed in claim 10 or 11, further comprising a controller configured to control an operation of the adhesive solution supply (SP),
wherein the controller is configured to receive a signal from the distance sensor (DS).

13. The apparatus as claimed in any one of claims 10 to 12, wherein the dryer (DP) comprises at least one selected from among a hot-air dryer, a cool-air dryer, an infrared dryer, and an ultraviolet dryer.

14. The apparatus as claimed in claim 12, wherein the controller is further configured to adjust an angle of the dryer (DP).

15. A dry electrode, comprising:
an electrode current collector;
an electrode active material layer on the electrode current collector, the electrode active material layer comprising an electrode active material, a first binder, and a first conductive material; and
a composite layer between the electrode current collector and the electrode active material layer,
wherein the composite layer comprises the electrode active material, the first binder, the first conductive material, a second binder, and a second conductive material,
wherein a concentration of the second binder is changed in the composite layer.
